# EUROPEAN PATENT SPECIFICATION

(11) **EP 0 330 399 B1**
(45) Date of publication and mention of the grant of the patent: **04.05.1994**
(21) Application number: 89301607.1
(22) Date of filing: 20.02.1989
(51) Int. Cl.: G02B 6/38

(54) **Sheath connector for an optical cable**
Mantelstecker für optisches Kabel
Connecteur pour câble optique muni d'un manchon de protection

(30) Priority: 23.02.1988 US 159151
(43) Date of publication of application: 30.08.1989
(73) Proprietor: THE WHITAKER CORPORATION, Wilmington, Delaware 19808 (US)
(72) Inventor: Gerace, Jeffrey Thomas, Harrisburg Pennsylvania 17112 (US); Plotts, Alan Edward, Harrisburg Pennsylvania 17112 (US)
(74) Representative: Warren, Keith Stanley

(56) References cited:
- EP-A- 0 195 432
- US-A- 4 204 306
- US-A- 4 362 356
- US-A- 4 645 296
- PATENT ABSTRACTS OF JAPAN, vol. 10, no. 41 (P-429)[2098], 18th February 1986, page 14 P 429; & JP-A-60 186 813

## Description

The invention relates to a connector for an optical fiber cable, and more particularly to an optical connector that is fully assembled before connection to an optical fiber cable and to a method of assembling an optical fiber cable to such a connector.

An optical cable is constructed with a central, buffer covered, optical fiber comprising an optical fiber for transmitting an optical signal, and a flexible buffer encircling the fiber and constructed of a solid polymeric material having a diameter many times larger than the diameter of the fiber. To resist a tensile force that might fracture the buffer covered fiber, the cable is constructed with a load bearing portion in the form of elongated strength members extending axially of the buffer covered fiber. The strength members extend between the sheath and the buffer covered fiber. For example, the strength members are elongated slender polymeric fibers of high tensile strength, such as KEVLAR, a trademark of E. I. DuPont de Nemours & Company, Wilmington, Delaware.

A connector is known from U.S. Patent 4,634,214. The known connector includes a terminus piece rigidly attached to a connector body. Adhesive is injected into a longitudinal bore of the terminus piece. A stainless steel tube is inserted between strength members and a buffer covered fiber of an optical fiber cable. The cable and tube are inserted into the connector body, with the fiber of the cable projecting along a longitudinal bore provided in the terminus piece. Wicking of the adhesive along the cable is desirable. The adhesive wicks and adheres to the sheath, the connector body, the tube, the strength members, the fiber and the terminus piece. Wicking of the adhesive along the cable also may cause undesirable leaking of the adhesive externally of the connector body. A crimp is applied to the connector body to prevent undesired leaking due to wicking of the adhesive. However, wicking of the adhesive occurs before the crimp is applied. Thus undesired wicking may occur before the crimp is applied.

The known connector utilizes a bayonet locking mechanism on a housing to which is mounted the spring biased terminus piece. A further disadvantage resides in the fact that the fiber and the strength members of the cable are bonded by the adhesive and move as a unit with the spring biased terminus piece. Accordingly, when the housing is attached by the bayonet locking mechanism to another connector, and when a tensile force is applied to the cable, the cable and the terminus piece move as a unit, and the spring bias of the terminus piece is disturbed.

The invention provides a connector for an optical fiber cable that prevents leaking of adhesive externally of the connector. The component parts of the connector can be assembled fully before the connector is assembled to an optical fiber cable. The construction of the connector prevents leaking of the adhesive without a crimp.

According to one aspect thereof the present invention consists in an elongate connector for an optical fiber cable, as defined in claim 1.

A connector according to the preamble of claim 1 is disclosed in US-A-4 252 406.

There is disclosed in EPA-0 195 432 a connector comprising a shell which can be anchored to the high-tensile sheath of an optical cable, a reciprocally movable holder disposed in the shell and holding the optical fiber and a biasing compression spring extending externally of the holder and acting between the holder and the shell to urge the holder forwardly along the shell, the holder being retractable along the shell rearwardly against the action of the spring.

According to another aspect thereof the present invention consists in a method as defined in claim 5, of assembling the optical fiber cable as defined in claim 1 to the connector of claim 1.

An embodiment of the invention will now be described by way of example with reference to the accompanying drawings in which:
Figure 1 is a perspective view of a connector for optical fiber cable with a crimp ferrule and a strain relief of the connector illustrated in exploded configuration.
Figure 2 is a perspective view of a portion of the connector shown in Figure 1, with additional parts illustrated in exploded configuration.
Figure 3 is an enlarged elevation view in section of an assembly of the portion of the connector shown in Figure 2.
Figure 4 is an enlarged elevation view in section of some of the parts illustrated in Figure 3.
Figure 5 is a view similar to Figure 3, and illustrating the parts shown in Figure 3, with a quantity of adhesive.
Figure 6 is a view similar to Figure 3, and illustrating assembly of a cable with the parts shown in Figures 1 and 3.

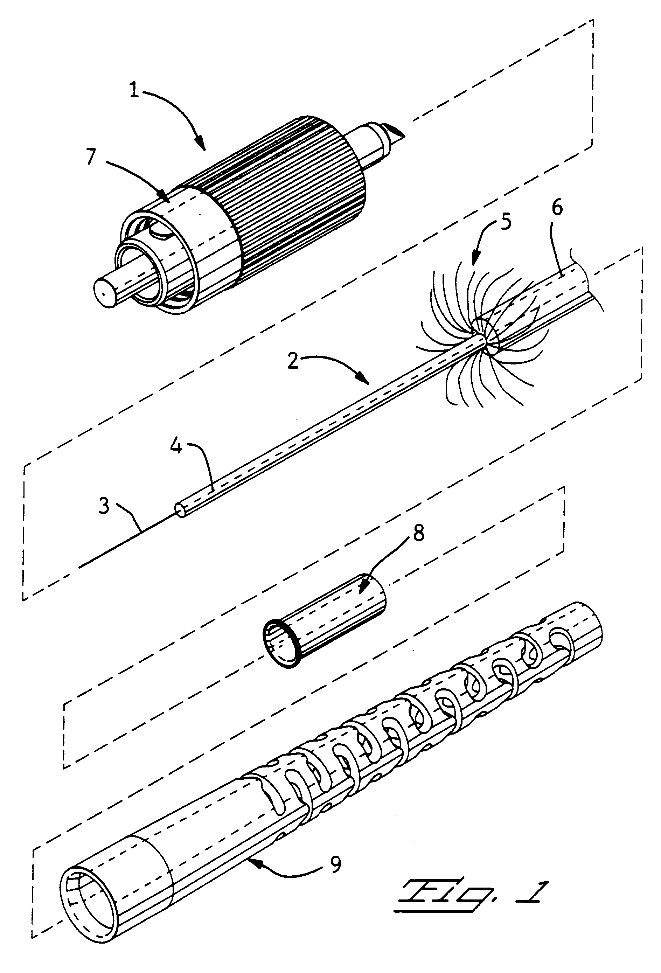

With more particular reference to the drawings there is illustrated, by way of example, in Figure 1 a connector 1 for an optical fiber cable 2, wherein the cable includes an elongated central optical fiber 3 concentrically encircled by a buffer 4, together comprising a buffer covered fiber. The cable 2 further includes a load bearing portion 5 in the form of elongated strength members 5 that extend lengthwise of the cable 2. The strength members 5 are distributed over the outer diameter of the buffer covered fiber 3,4. The cable 2 further includes an outer jacket 6 of polymeric material enclosing the strength members 5. Parts of the cable 2 are cut away as shown to provide; a length of fiber 3 projecting from the buffer 4 of the cable 2, and a length of the buffer covered fiber 3,4 projecting from the strength members 5, and lengths of the strength members 5 projecting from the jacket 6. The buffer covered fiber 3,4 is slidable within the jacket 6 and within the surrounding strength members 5.

The connector 1 includes a connector assembly 7 and a crimp ferrule 8. A tubular strain relief boot 9 also is shown.

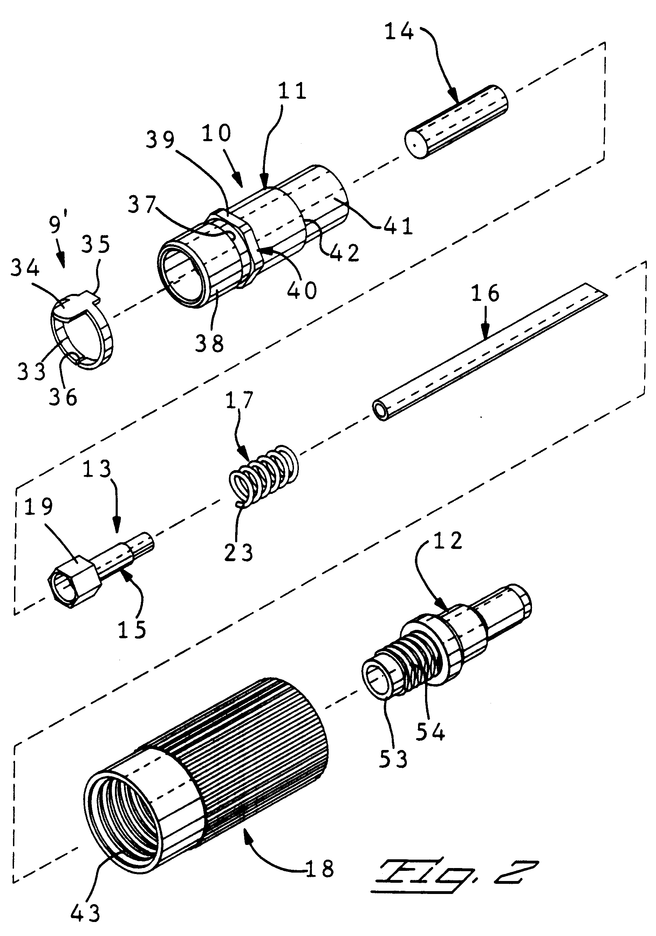

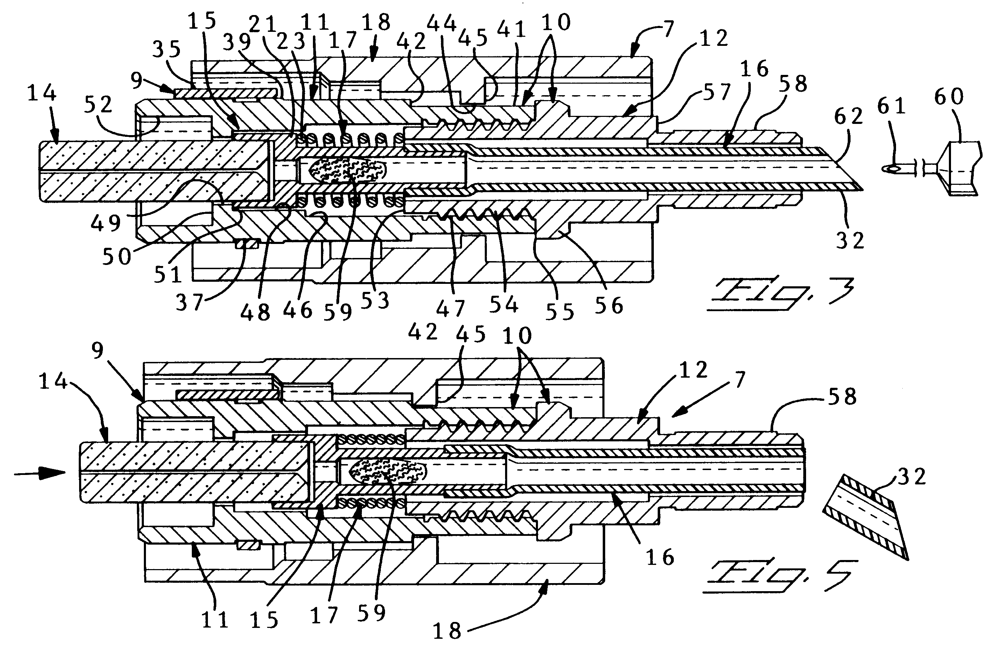

As shown in Figures 2 and 3, the connector assembly 7 includes; a metal polarizing ring 9′, a metal shell 10 comprised of a front shell portion 11 and a rear shell portion 12 and the crimp ferrule 8, a holder 13 for the optical fiber comprised of a ceramic alignment ferrule 14 and a metal body 15 and a sheath 16, a biasing spring 17 of coil form, and an internally threaded coupling ring 18.

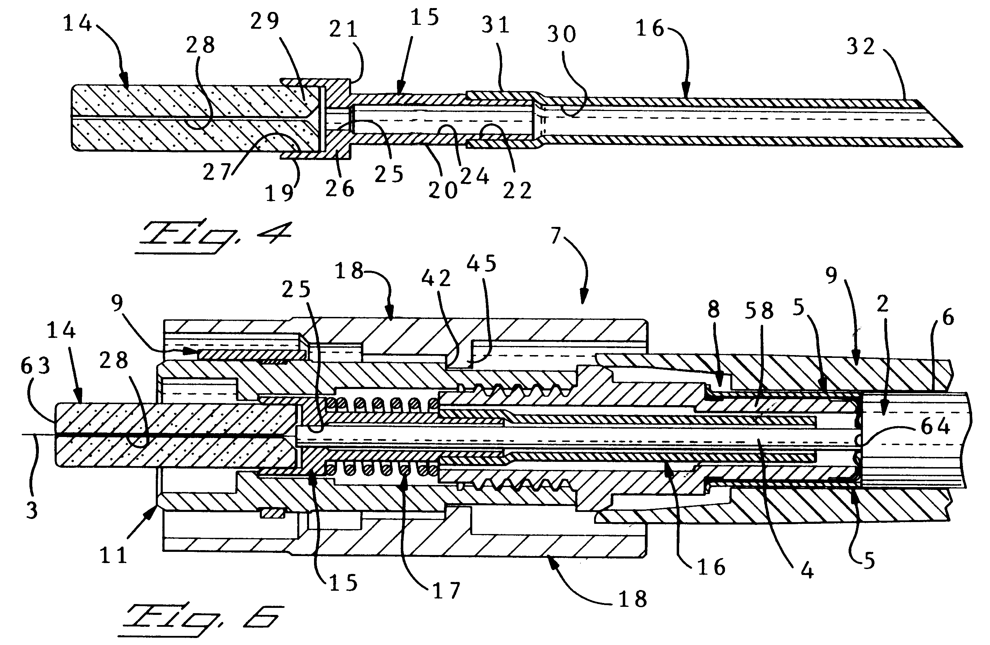

As shown in Figures 2 and 4, the body 15 includes an enlarged front end 19 with an external hexagonal cross section, a reduced external diameter intermediate portion 20 intersecting a rear facing shoulder 21 of the enlarged front end 19 , and a rear end 22 with a reduced external diameter. The coil spring 17 is assembled as shown in Figure 3 to encircle the reduced external diameter portion 20, with a front end 23 of the coil spring 17 engaged and biased against the shoulder 21.

The body 15 includes an axial passageway 24 extending from the rear end 22. The passageway 24 has a reduced diameter, funnel entryway 25 extending through an internal transverse web 26, and an enlarged diameter counterbore 27 in the front end 19. The ceramic alignment ferrule 14 has a central longitudinal bore 28 aligned with the entryway 25. A rear end 29 of the ferrule 14 is press fitted into the counterbore 27 of the body 15. The sheath 16 is a length of flexible plastic tubing having a hollow interior 30, a front end 31 assembled to encircle the reduced diameter rear end 22 of the body 15, and a rear end portion 32. The sheath 16 is held on the body 15 by friction.

The polarizing ring 9' is shown in Figure 2, and is stamped and formed from a single strip of metal, and includes an elongated strap 33 and a finger 34 projecting transversely of the strap 33. A tab 35 is aligned with the finger 34 and projects transversely of the strap 33 in a direction opposite to that of the finger 34. The strap 33 is curved to form a ring that is transversely bifurcated by a seam 36. The strap 33 is assembled for rotation in an external circumferential groove 37 encircling a front end 38 of the front shell portion 11, with the finger 34 pointing to the front end 38 of the front shell portion 11, and with the tab 35 overlapping and engaged on one of the flat surfaces 39 of a radially projecting collar 40 of hexagonal cross section on the exterior of the front shell portion 11. The front shell portion 11 includes a rear end 41 with a reduced external diameter intersecting a rear facing external shoulder 42. The coupling ring 18 has an enlarged diameter, internally threaded front end 43 and a reduced internal diameter opening 44 extending through a transverse wall 45. The coupling ring 18 is assembled with the opening 44 received slidably over the rear end 41 of the front shell portion 11.

The front shell portion 11 includes an axial cavity 46 having an enlarged diameter rear end 47 that is internally threaded, an intermediate portion 48 having a hexagon shaped periphery 48, and a reduced diameter front portion 49 extending through an end wall 50 of the front body portion 11. A rear facing, radially extending internal shoulder 51 is defined at the intersection of the diameter portions 48 and 49. A cylindrical hood 52 with an enlarged internal diameter extends forwardly from the front of the end wall 50.

The rear shell portion 12 includes a front end 53, an externally threaded forward portion 54 extending to a front facing external shoulder 55 defined by an exterior circumferential flange 56, a rear facing external shoulder 57 forwardly of a reduced external diameter end portion 58. The reduced diameter end portion 58 defines a cable anchoring portion 58.

As shown in Figure 3, the holder 13 and the biasing spring 17 are assembled together and are assembled in the cavity 46 of the front shell portion 11, with the alignment ferrule 14 projecting through the end wall 50 forwardly of the end wall 50 and the hood 52, and with the sheath 16 projecting outwardly of the rear ends 58 of the rear shell portion 12. The rear shell portion 12 is slidably assembled over the sheath 16 of the body 10 and is threadably advanced along the internally threaded rear end 41 of the front body portion 11 until the shoulder 55 engages the rear end 41 of the front shell portion 11. The biasing spring 17 is in compression between the front end 53 of the rear shell portion 12 and the shoulder 21 of the body 15. Thereby the holder 13 is biased forwardly by the spring 17 and is mounted for axial slidable displacement and reciprocation with respect to the shell 10. The hexagonal front end 19 of the body 15 is confined by the hexagonal periphery 48 of the cavity 46 to prevent rotation of the holder 13 in the cavity 46. The coupling ring 18 is slidable over the shell 10 and confined between the shoulders 42 and 55. Thereby the connector assembly 7 is fully assembled.

Assembly of the connector 1 to the cable 2 is described as follows. The cable 2 is passed successively along the interiors of the strain relief boot 9 and the crimp ferrule 8. As shown in Figure 3, a quantity of a known, commercially available adhesive 59 is deposited in the body 15 of the holder 13. For example, the adhesive 59 may be injected by a syringe 60 having an elongated hollow needle 61. The needle 61 is introduced into the end portion 32 of the sheath 16 which has been cut at an angle to provide an enlarged elliptical mouth 62 at the end portion 32 of the open tubular sheath 16. The rear end portion 32 of the sheath 16 projects outwardly from the cable anchoring portion 58 of the shell 10, and sheaths the needle 61 during entry and withdrawal from the sheath 16. The shell 10 is protected against touching by the needle 61 and against deposition of adhesive 59. The needle 61 is passed substantially along the interior of the sheath 16 before depositing the quantity of adhesive 59 within the body 15 of the holder 13. The adhesive 59 is deposited near the front end 19 of the body 15, adjacent to the alignment ferrule 14 and remote from the open rear end portion 32 of the sheath 16. The sheath 16 prevents leaking of the adhesive 59 from the holder 13 and prevents the adhesive 59 from spreading over the spring 17 and the shell 10.

As shown in Figure 5, following withdrawal of the needle 61, the alignment ferrule 14 is pressed against a stationary surface, for example a table, not shown, causing the holder 13 to be slidably displaced, compressing the coil spring 17, and projecting the rear end portion 32 of the sheath 16 further outward from the rear end 58 of the shell 10. The projecting rear end portion 32 of the sheath 16 is then cut away and removed from the connector assembly 7. The plastic tube is easily cut. Upon expansion of the coils of the biasing spring 17, the sheath 16 is retracted within the shell 10, as shown in Figure 6. The buffer covered fiber 3,4 of the cable 2 is assembled in the rear end 58 of the shell 10 and into and along the sheath 16. The sheath 16 internal diameter receives and guides the buffer covered fiber 3,4 for assembly along the passageway 24 of the body 15. The entry 25 of the passageway 24 guides the fiber 3 of the cable 2 into the bore 28 of the alignment ferrule 14. The periphery of the entry 25 encircles and supports the buffer covered fiber 3,4. The front end of the fiber 3 is exposed at a front end 63 of the ferrule 14 and is finished with an optical face, by a known procedure of polishing or fracturing. The sheath 16 closely encircles the buffer covered fiber 3,4 to prevent wicking of the adhesive 59 along the buffer covered fiber 3,4 to such an extent that the adhesive 59 leaks from the open rear end of the sheath 16. The adhesive 59 will be brought into contact with and will coat the fiber 3 and the buffer covered fiber 3,4, and further, the adhesive 59 will be urged forwardly of the holder 13 by the buffer covered fiber 3,4, as the buffer covered fiber 3,4 moves forwardly of the sheath 16 and of the body 15 and of the alignment ferrule 14. It is not necessary for the adhesive 59 to wick in a direction rearward of the buffer covered fiber 3,4 or rearwardly of the holder 13, since the adhesive 59 is desired only to bond the buffer covered fiber 3,4 within the holder 13, and the fiber 3 in the alignment ferrule 14.

The internal diameter of the shell rear end 58 is smaller than the external diameter of the cable jacket 6. Thus, the jacket 6 remains outside of the shell 10, while the shell rear end 58 opposes a front end 64 of the cable jacket 6. The strength members 5 are placed to overlap the exterior of the shell rear end 58. The crimp ferrule 8 is displaced along the cable 2 to a position concentrically encircling the shell rear end 58. Pressure is radially applied on the crimp ferrule 8 to compress the ferrule radially inward to clamp the strength members 5 between the ferrule 8 and the shell rear end 58. Thereby, the strength members 5 are anchored to the shell rear end 58. The strain relief boot 9 is advanced along the cable 2 to encircle the ferrule 8 and the jacket 6 of the cable 2 where the jacket 6 projects adjacent to the shell 10. The buffer covered fiber 3,4 and the holder 13 are joined together as a unit by the adhesive 59 for reciprocation and axial slidable displacement with respect to the shell 10 and the coupling ring 18 and the strength members 5 and the jacket 6 of the cable 2. When the coupling ring 18 is threadably attached to a complementary connector, not shown, the coupling ring 18 engages the shoulder 42. The end 63 of the alignment ferrule 14 engages a portion of the complementary connector and is slidably biased rearwardly of the connector 1 against the bias of the coil spring 17. The bias of the coil spring 17 will urge the end 63 of the ferrule 14 in a direction forwardly of the connector 1 and engaged against the portion of the complementary connector, to maintain a desired alignment of the optical face of the fiber 3 with the portion of the complementary connector. According to an aspect of the invention, the strength members 5 of the cable 2 is anchored to the shell 10, whereby the strength members and the shell 10 are connected together as a unit. Should a tensile force be applied to the cable 2, the force will be transmitted along the shell and to the coupling ring and to the complementary connector. The spring bias on the holder 13 is not disturbed by the tensile force. The buffer covered optical fiber 3,4 is not slidably displaced by the tensile force, and the desired alignment of the optical face of the fiber 3 is not disturbed, and the desired engagement of the ferrule 14 with the complementary connector is not disturbed.

## Claims

1. An elongate connector (1) for an optical fiber cable (2), said cable (2) comprising a load bearing portion (5) and an optical fiber (3) which is slidable within the load bearing portion (5), the connector (1) including a tubular shell (10) to the rear of which the load bearing portion (5) of the cable (2) is to be anchored, a tubular holder body (15) for holding the fiber (3) axially reciprocally movably mounted within the shell (10), and a compression spring (17) acting between the holder (13) and the shell (10) to urge the holder (13) forwardly along the shell (10), the holder (13) being retractable along the shell (10) rearwardly against the action of the spring (17); characterised by an alignment sleeve (14) forwardly prolonging the holder body (15) for tightly and firmly holding a bared end portion of the fiber (3), and a sheath portion (16) extending rearwardly from the rear portion (20) of the holder (13) and enclosing a fiber receiving continuous passageway (30) extending axially therethrough, the tubular holder body (15) being dimensioned for holding a buffer covered portion of the fiber, the shell (10) having an open rear end portion (18), the sheath (16) extending rearwardly along the shell (10) over a substantial length thereof which is sufficient to enable free access to the open rear end (32) of the sheath (16) from the outside to allow, before insertion of the fiber, the insertion of an adhesive (59) through said continuous passageway (30) up to the holder body (15), the sheath (16) being dimensioned closely to encircle the buffer covered portion (4) of the fiber (3) to be inserted thereafter to prevent rearward wicking of the adhesive (59).

2. A connector as claimed in claim 1, characterised by anchoring means (8) for connecting the shell (10) and the load bearing portion (5) so as to anchor the load bearing portion (5) to the shell (10).

3. A connector as claimed in claim 1 or 2, characterised in that a strain relief (9) is intended to encircle at least a portion of the shell (10) and at least a portion of the cable (2) Projecting from the shell (10).

4. A connector as claimed in claim 1 with the optical cable as defined in claim 1 assembled thereto, characterised in that the load bearing portion (5) of the cable (2) is anchored to the shell (10) with a buffer covered portion (4) of the fiber (3) extending through the continuous passageway (30) of the sheath portion (16) and into the holder body (15) and being secured therein by means of an adhesive (59), the bared end portion of the fiber (3) projecting therefrom being tightly and firmly held in the alignment sleeve (14).

5. A method of assembling the optical fiber cable (2) as defined in claim 1 to the connector (1) as claimed in claim 1, the method being characterised by the steps of:
depositing an adhesive (59) in the tubular holder body (15) by way of the open rear end of the sheath portion (16) and the continuous passageway (30) thereof;
inserting a buffer covered portion (4) of the optical fiber (2) through said continuous passageway (30) and said holder body (15), and the bared end portion of the fiber (2) projecting therefrom into the alignment sleeve (14); and
connecting the load bearing portion (5) of the fiber cable (2) and the shell (10) together.

6. A method as claimed in claim 5, characterised by the further step of removing the rear end portion (32) of the sheath (16) prior to inserting the optical fiber (3) into the sheath (16).

## Patentansprüche

1. Länglicher Verbinder (1) für ein optisches Faserkabel (2), das einen iastaufnehmenden Teil (5) und eine optische Faser (3) aufweist, die innerhalb des lastaufnehmenden Teils (5) verschiebbar ist, wobei der Verbinder (1) eine rohrförmige Hülse (10) aufweist, an deren Rückseite der lastaufnehmende Teil (5) des Kabels (2) zu verankern ist, mit einem rohrförmigen Halterkörper (15) zum Halten der Faser (3), der axial hin und her bewegbar innerhalb der Hülse (10) gelagert ist, und mit einer Druckfeder (17), die zwischen dem Halter (13) und der Hülse (10) wirkt, um den Halter (13) nach vom längs der Hülse (10) zu drücken, wobei der Halter (13) längs der Hülse (10) nach hinten gegen die Wirkung der Feder (17) zurückziehbar ist, **gekennzeichnet durch** eine Ausrichthülse (14), die den Halterkörper (15) nach vorn verlängert, um einen freigelegten Endabschnitt der Faser (3) dicht und fest zu halten, und durch einen Mantelabschnitt (16), der sich von dem hinteren Abschnitt (20) des Halters (13) nach hinten erstreckt und der einen sich axial durch diesen hindurcherstreckenden, die Faser aufnehmenden kontinuierlichen Durchgang (30) umschließt, wobei der rohrförmige Halterkörper (15) zum Halten eines durch einen Puffer abgedeckten Teils der Faser ausgebildet ist, wobei die Hülse (10) einen offenen hinteren Endabschnitt (18) hat und der Mantel (16) sich nach hinten längs der Hülse (10) über eine wesentliche Länge derselben erstreckt, die ausreichend ist, um einen freien Zugang zu dem offenen hinteren Ende (32) des Mantels (16) von außen zu ermöglichen, um vor dem Einsetzen der Faser das Einbringen eines Klebers (59) durch den kontinuierlichen Durchgang (30) bis zu dem Halterkörper (15) zu gestatten, wobei der Mantel (16) so dimensioniert ist, daß er den durch einen Puffer abgedeckten Teil (4) der Faser (3) eng umhüllt, der anschließend einzusetzen ist, um ein Wandern des Klebers (59) nach hinten zu verhindern.

2. Verbinder nach Anspruch 1, **gekennzeichnet durch** Verankerungsmittel (8) zum Verbinden der Hülse (10) und des lastaufnehmenden Teils (5) so, daß der lastaufnehmende Teil (5) an der Hülse (10) verankert wird.

3. Verbinder nach Anspruch 1 oder 2, **dadurch gekennzeichnet,** daß eine Zugentlastung (9) vorgesehen ist, um wenigstens einen Teil der Hülse (10) und wenigstens einen Teil des Kabels (2) zu umschließen, der von der Hülse (10) vorragt.

4. Verbinder nach Anspruch 1, verbunden mit dem in Anspruch 1 angegebenen optischen Kabel, **dadurch gekennzeichnet,** daß der lastaufnehmende Teil (5) des Kabels (2) an der Hülse (10) verankert ist, wobei sich ein mit einem Puffer abgedeckter Teil (4) der Faser (3) durch den kontinuierlichen Durchgang (30) des Mantelabschnitts (16) hindurch und in den Halterkörper (15) erstreckt und darin mittels eines Klebers befestigt ist, wobei der davon vortagende freigelegte Endabschnitt der Faser (3) dicht und fest in der Ausrichthülse (14) gehalten ist.

5. Verfahren zum Zusammenfügen des optischen Faserkabels (2) gemäß Anspruch 1 mit dem in Anspruch 1 beanspruchten Verbinder (1), wobei das Verfahren durch folgende Schritte gekennzeichnet ist:
- Einbringen eines Klebers (59) in den rohrförmigen Halterkörper (15) durch das offene hintere Ende des Mantelabschnitts (16) und dessen kontinuierlichen Durchgang (30),
- Einsetzen eines mit einem Puffer abgedeckten Teils (4) der optischen Faser (2) durch den kontinuierlichen Durchgang (30) und den Halterkörper (15), wobei der freigelegte Endabschnitt der Faser (2) von dieser in die Ausrichthülse (14) vorragt, und
- Verbinden des lastaufnehmenden Teils (5) des Faserkabels (2) und der Hülse (10) miteinander.

6. Verfahren nach Anspruch 5, **gekennzeichnet durch** den weiteren Schritt des Entfernens des hinteren Endabschnitts (32) des Mantels (16) vor dem Einsetzen der optischen Faser (3) in den Mantel (16).

## Revendications

1. connecteur allongé (1) pour un câble (2) à fibre optique, ledit câble (2) comportant une partie (5) porteuse de charge et une fibre optique (3), qui peut glisser à l'intérieur de la partie (5) porteuse de charge, le connecteur (1) comprenant une coque tubulaire (10) à la partie arrière de laquelle la partie porteuse de charge (5) du câble (2) doit être ancrée, un corps (15) de support tubulaire destiné à maintenir la fibre (3), monté de façon à pouvoir effectuer un mouvement alternatif axial à la l'intérieur de la coque (10), et un ressort (17) de compression agissant entre le support (13) et la coque (10) pour solliciter le support (13) vers l'avant le long de la coque (10), le support (13) pouvant être rétracté le long de la coque (10) vers l'arrière contre l'action du ressort (17) ; caractérisé par une virole (14) d'alignement prolongeant vers l'avant le corps (15) du support pour maintenir étroitement et fermement une partie extrême dénudée de la fibre (3), et une partie à manchon (16) s'étendant vers l'arrière depuis la partie arrière (20) du support (13) et renfermant un passage continu (30) de réception d'une fibre s'étendant axialement à travers lui, le corps tubulaire (15) du support étant dimensionné pour maintenir une partie gainée de la fibre, la coque (10) ayant une partie extrême arrière ouverte (18), le manchon (16) s'étendant vers l'arrière le long de la coque (10) sur une longueur importante de celle-ci, qui est suffisante pour permettre un accès libre à l'extrémité arrière ouverte (32) du manchon (16) depuis l'extérieur afin de permettre, avant l'insertion de la fibre, l'insertion d'un adhésif (59) par l'intermédiaire dudit passage continu (30) jusqu'au corps (15) du support, le manchon (16) étant dimensionné pour entourer étroitement la partie gainée (4) de la fibre (3) devant être ensuite insérée afin d'empêcher l'adhésif (59) de s'infiltrer vers l'arrière.

2. Connecteur suivant la revendication 1, caractérisé par un moyen d'ancrage (8) pour relier la coque (10) et la partie porteuse de charge (5) afin d'ancrer la partie porteuse de charge (5) à la coque (10).

3. Connecteur selon la revendication 1 ou 2, caractérisé en ce qu'une pièce de soulagement de contrainte (9) est destinée à entourer au moins une partie de la coque (10) et au moins une partie du câble (2) faisant saillie de la coque (10).

4. Connecteur selon la revendication 1, avec le câble optique tel que défini dans la revendication 1, assemblé avec ce connecteur, caractérisé en ce que la partie porteuse de charge (5) du câble (2) est ancrée à la coque (10), une partie formant gaine (4) de la fibre (3) s'étendant dans le passage continu (30) de la partie de manchon (16), pénétrant dans le corps (15) du support et y étant fixée au moyen d'un adhésif (59), la partie extrême dénudée de la fibre (3), qui en fait saillie, étant maintenue étroitement et fermement dans la virole (14) d'alignement.

5. Procédé d'assemblage du câble à fibre optique (2) tel que défini dans la revendication 1 avec le connecteur (1) selon la revendication 1, le procédé étant caractérisé par les étapes qui consistent :
à déposer un adhésif (59) dans le corps tubulaire (15) du support en passant par l'extrémité arrière ouverte de la partie de manchon (16) et par son passage continu (30) ;
à insérer une partie formant gaine (4) de la fibre optique (2) par l'intermédiaire dudit passage continu (30) et dudit corps (15) du support, la partie extrême dénudée de la fibre (2) en faisant saillie jusque dans la virole (14) d'alignement ; et
à relier entre elles la partie porteuse de charge (5) du câble (2) à fibre et la coque (10).

6. Procédé selon le revendication 5, caractérisé par l'autre étape qui consiste à enlever la partie extrême arrière (32) du manchon (16) avant d'insérer la fibre optique (3) dans le manchon (16).
